# EUROPEAN PATENT SPECIFICATION

(11) **EP 2 644 853 B1**
(45) Date of publication and mention of the grant of the patent: **06.07.2016**
(21) Application number: 12162043.9
(22) Date of filing: 29.03.2012
(51) Int. Cl.: F01K 25/10, F01K 27/02, F01K 23/10

(54) **Energy saving and heat recovery in carbon dioxide compression systems and a system for accomplishing the same**
Energieeinsparung und Wärmerückgewinnung in Kohlendioxid-Kompressionssystemen und System zum Erreichen davon
Économie d'énergie et récupération de chaleur dans des systèmes de compression de dioxyde de carbone et système permettant de les mettre en oeuvre

(43) Date of publication of application: 02.10.2013
(73) Proprietor: ALSTOM Technology Ltd, 5400 Baden (CH)
(72) Inventor: Brack, Reinhard, 65934 Frankfurt (DE); Strohm, Kathrin, 55278 Dexheim (DE)
(74) Representative: General Electric Technology GmbH

(56) References cited:
- DE-A1-102009 032 537
- US-A1- 2011 120 128
- US-A1- 2011 265 477

## Description

### FIELD OF THE INVENTION

This disclosure is related to methods of recovering heat from power plant exhaust gases. In particular, this disclosure is related to methods of capturing heat from carbon dioxide gases exhausted from the power plant during sequestration procedures.

### BACKGROUND OF THE INVENTION

The combustion of a fuel, such as coal, oil, peat, waste, biofuels, and the like, in a combustion plant such as a power plant, generates a hot process gas stream known as a flue gas stream. In general, the flue gas stream contains particulates and gaseous contaminants such as carbon dioxide (CO₂). The negative environmental effects of releasing carbon dioxide to the atmosphere have been recognized and have resulted in the development of processes for removing the carbon dioxide from flue gas streams and sequestering the removed carbon dioxide. In various sequestration processes, the carbon dioxide gas is compressed to form liquid carbon dioxide which can then be pumped underground. The heat released during carbon dioxide compression and condensation to liquid is generally absorbed by cooling water that is on hand for such purposes. During warm season, the preparation (i.e., cooling) of this water can be costly. In addition, the heat absorbed by this cooling water is typically wasted, leading to reduced power plant efficiency. Therefore, there is a desire to provide a method of capturing heat from the condensation of carbon dioxide for use at power plants.

DE 10 2009 032 537 discloses a method a power plant according to the precharacterizing part of claims 1 and 11.

### SUMMARY

Disclosed herein is a method of capturing heat at a power plant that includes absorbing the heat released from carbon dioxide gas from the power plant using a refrigerant; transferring the absorbed heat from the refrigerant to a water condensate obtained at the power plant to raise a temperature of the water condensate; and supplying the heated water condensate to the power plant to capture the heat released from the carbon dioxide.

Disclosed herein too is an apparatus for recirculating heat in a power plant that includes a first heat transfer device configured to transfer heat from a carbon dioxide exhaust gas of the power plant to a refrigerant; and a second heat transfer device configured to transfer the heat from the refrigerant to a water condensate of the power plant, wherein the heated water condensate is provided to the power plant to recirculate the heat.

Disclosed herein too is a power plant system comprising an exhaust of the power plant system configured to release a carbon dioxide gas; a first heat exchanger configured to transfer heat from the carbon dioxide gas to a refrigerant; the first heat exchanger being downstream of the power plant system; a second heat exchanger configured to transfer the heat from the refrigerant to a water condensate of the power plant system, where the second heat exchanger lies downstream of the first heat exchanger; and
a steam turbine configured to generate power using the heated water condensate from the second heat exchanger, where the steam turbine lies down stream of the second heat exchanger.

Disclosed herein too is a method of operating a power plant, the method including obtaining a carbon dioxide gas from an exhaust of the power plant; transferring heat from the obtained carbon dioxide gas to a heat transfer medium; transferring the heat from the heat transfer medium to a water condensate obtained at the power plant; supplying the heated water condensate to the power plant; and generating steam from the heated water condensate to generate power at a steam turbine of the power plant.

### BRIEF DESCRIPTION OF THE FIGURES

Figure 1 shows an exemplary system for capturing heat from carbon dioxide exhaust in an exemplary embodiment of the present disclosure.
Figure 2 shows an alternate embodiment for capturing heat from carbon dioxide using a heat exchanger in parallel with the system of Figure 1.

### DETAILED DESCRIPTION

The present disclosure is directed to a method and apparatus for capturing and recirculating heat from a power plant. In one aspect, the present disclosure describes a method of heating a boiler feed water for a power plant using heat generated during a carbon dioxide sequestration process. In general, the heat is captured from carbon dioxide that is isolated from an exhaust stream of the power plant. The heat is released when the carbon dioxide is compressed and condensed from a gaseous phase to a liquid phase. The carbon dioxide is compressed at pressures that are less than a critical point of carbon dioxide. The "critical point" as disclosed herein refers to the pressure and temperature characteristics at which carbon dioxide is converted to supercritical carbon dioxide. A first heat exchanger and a second heat exchanger are used to capture the heat released from the carbon dioxide. The first heat exchanger transfers heat from condensation and/or compression of the carbon dioxide to a refrigerant or suitable heat transfer medium. In an exemplary embodiment, the refrigerant is methylamine. The second heat exchanger transfers the heat from the refrigerant to a water condensate collected from a steam turbine. The water condensate results from the condensation of steam that is used as a working gas at the steam turbine. The heat is transferred from the refrigerant to the water condensate to elevate the temperature of the water condensate for use as boiler feed water. Supplying the boiler feed water to the power plant therefore recirculates the heat generated by sequestration back to the power plant. In another aspect, the present disclosure further describes a power plant and a method of operating a power plant.

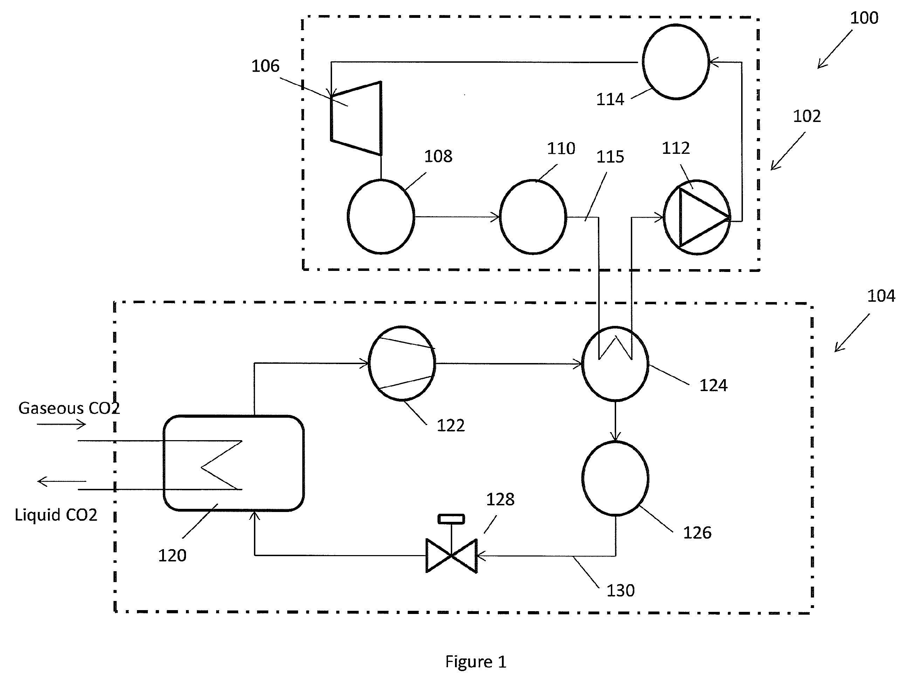

Figure 1 shows an exemplary heat recovery system 100 suitable for use with a combustion-type power plant. The exemplary heat recovery system includes a steam turbine cycle 102 and a refrigeration cycle 104. The steam turbine cycle 102 comprises a feed water pump 112, a boiler 114, a steam turbine 106, a surface condenser 108 and a pump 110 in fluid communication with a second heat exchanger 124. While the feed water pump 112, the boiler 114, the steam turbine 106, the surface condenser 108, the pump 110 and the second heat exchanger 124 are part of the steam turbine recycle loop 102, it is to be noted that the feed water pump 112, the boiler 114, the steam turbine 106, the surface condenser 108 and the pump 110 lie downstream of the second heat exchanger 124 in succession. It is to be noted that since the steam turbine cycle 102 and the refrigeration cycle 104 are recycle loops, some components can be both upstream as well as downstream of a particular point in the loop.

The refrigeration cycle 104 comprises a first heat exchanger 120, a refrigerant compressor 122, the second heat exchanger 124, a condensate receiver 126, an expansion valve 128 all of which are in fluid communication with one another. The refrigerant compressor 122, the second heat exchanger 124, the condensate receiver 126, and the expansion valve 128 all lie downstream of the first heat exchanger 120 in succession. It is to be noted that the second heat exchanger 124 is a part of both the steam turbine cycle 102 and the refrigeration cycle 104.

The steam turbine cycle 102 generally circulates water in either a gaseous or liquid phase throughout the power plant to generate power. Water held at the boiler 114 is heated to produce steam which is then introduced at an inlet to the steam turbine 106. In accordance with one embodiment heating of water in the boiler 114 to produce steam may be achieved by combusting a fuel, such as coal, oil, peat, waste, biofuels etc., and transferring heat from a flue gas stream formed by such combustion to the water in the boiler 114. The flue gas stream generated from such combustion of a fuel comprises carbon dioxide. Hence, at least a portion of the heat transferred from the flue gas stream to the water in the boiler 114 is transferred to the water from carbon dioxide comprised in the flue gas stream. The steam passes through the steam turbine 106 as a working gas to generate electricity and/or power. The steam is generally cooled and expanded as it exits the steam turbine and therefore condenses to water, which is collected at the surface condenser 108. Pump 110 pumps the condensed water 115 to the second heat exchanger 124 of the refrigeration cycle 104. At the second heat exchanger 124, the water 115 absorbs heat from a refrigerant of the refrigeration cycle 104, as discussed in detail below. Boiler feed water pump 112 then pumps the heated water to the boiler 114, at which point the water is boiled to generate steam for power generation, thereby completing the steam turbine cycle 102.

The exemplary refrigeration cycle 104 includes the first heat exchanger 120 and the second heat exchanger 124. A refrigerant 130 or other medium suitable for heat conduction and/or heat transfer is circulated back and forth between the first heat exchanger 120 and the second heat exchanger 124 to complete the refrigeration cycle 104. The first heat exchanger 120 receives carbon dioxide (from a carbon dioxide emitter) and refrigerant 130 and is configured for carbon dioxide compression and condensation and for evaporation of the refrigerant. Heat that is released from the carbon dioxide due to compression and condensation is transferred to the refrigerant and causes the refrigerant to evaporate. The carbon dioxide condenses at a pressure that is less than the critical pressure of carbon dioxide. The second heat exchanger 124 receives refrigerant gas 130 and water 115 and allows for the refrigerant gas 130 to condense. Heat released from condensation of the refrigerant 130 at the second heat exchanger 124 is absorbed by the water 115 to heat the water 115.

In one embodiment, the carbon dioxide gas received at the first heat exchanger 120 is carbon dioxide gas emitted from the power plant. The carbon dioxide emission gas is generally separated from other emission gases, such as NOx and SOx gases, using various gas separation processes (not shown). The condensation of the separated carbon dioxide emission gas to a liquid carbon dioxide phase is performed for various reasons, one of which is to sequester the carbon dioxide to a selected location, such as underground. The separated carbon dioxide generally undergoes various cycles of compression and cooling in order to obtain carbon dioxide liquid. For at least the last cycle, the first heat exchanger 120 receives the carbon dioxide and absorbs heat of compression and condensation.

The refrigerant compressor 122 is disposed along a circulation path of the refrigerant gas 130 from the first heat exchanger 120 to the second heat exchanger 124. The refrigerant compressor 122 raises the pressure and temperature of the refrigerant gas prior to the second heat exchanger 124. The refrigerant condensate receiver 126 and the expansion valve 128 are disposed along the circulation path of the refrigerant liquid 130 from the second heat exchanger 124 to the first heat exchanger 120. The refrigerant condensate receiver 126 collects condensed refrigerant 130 from the second heat exchanger 124. The expansion valve 128 delivers the condensed refrigerant 130 to the first heat exchanger 120 at a pressure and temperature suitable for heat absorption at the first heat exchanger 120.

Figure 1 is discussed below with respect to various exemplary temperatures and pressures which are provided for illustrative purposes only and which are not meant as a limitation of the present disclosure. In an exemplary embodiment, the refrigerant is methylamine. However, various other mediums, gases and liquids for heat transfer can be suitable in performing the heat capture described herein. In the exemplary embodiment, the gaseous carbon dioxide phase enters the first heat exchanger 120 at a temperature of about 110°C and a pressure of about 65 bars and exits the first heat exchanger 120 at a temperature of about 25°C and a pressure of about 65 bars (66.28 kilograms per square centimeter). Although a pressure of 65 bars is illustrative, it is noted that the carbon dioxide condenses to liquid at a pressure below a critical point of carbon dioxide, i.e., without entering a supercritical carbon dioxide phase. Meanwhile, liquid refrigerant 130 enters the first heat exchanger 120 at about 20°C and about 2.4 bars (2.44 kilograms per square centimeters) and evaporates to a gas having the same temperature and pressure. The heat released from the carbon dioxide is absorbed by the refrigerant, causing the refrigerant to evaporate from a liquid to a gas. In one aspect of the present disclosure, the pressure of the refrigerant at the first heat exchanger 120 is less than the pressure of the carbon dioxide at the first heat exchanger 120. Thus, any leakage or damage at the first heat exchanger 120 will cause contamination of the refrigerant rather than contamination of the carbon dioxide.

The refrigerant gas 130 is compressed at the refrigerant compressor 122 which elevates the temperature and pressure of the refrigerant gas prior to entering the second heat exchanger 124. In one embodiment, the refrigerant compressor 122 is a centrifugal compressor for refrigerants having a molecular weight in a range from about 25 to about 40 grams per mole. In an exemplary embodiment, the refrigerant compressor 122 raises the temperature of the refrigerant gas 130 to about 120°C and raises the pressure to about 16 bar (16.315 kilograms per square centimeters). The refrigerant gas 130 then condenses at the second heat exchanger 124 to a liquid having an exemplary temperature of about 80°C and an exemplary pressure of about 16 bars. Heat released from the refrigerant at the second heat exchanger 124 is absorbed by the water condensate 115 of the steam turbine cycle 102. In an exemplary embodiment, the water condensate 115 enters the second heat exchanger 124 at about 50°C and 20 bars (20.39 kilograms per square centimeters) and exits that second heat exchanger 124 at about 70°C and 20 bars. The pressure of the refrigerant 130 at the second heat exchanger 124 is selected to be less than the pressure of the water condensate 115 at the second heat exchanger 124. Therefore, any leakage or damage at the second heat exchanger 124 will cause contamination of the refrigerant 130 rather than of the water condensate 115.

Thus, in one embodiment, the heat released by compression and condensation of the carbon dioxide is captured and returned to the power plant using the refrigeration cycle 104 and steam turbine cycle 102 of Figure 1 as shown in Figure 1. In an alternate embodiment, additional heat capture methods can be used alongside the system of Figure 1, as discussed below.

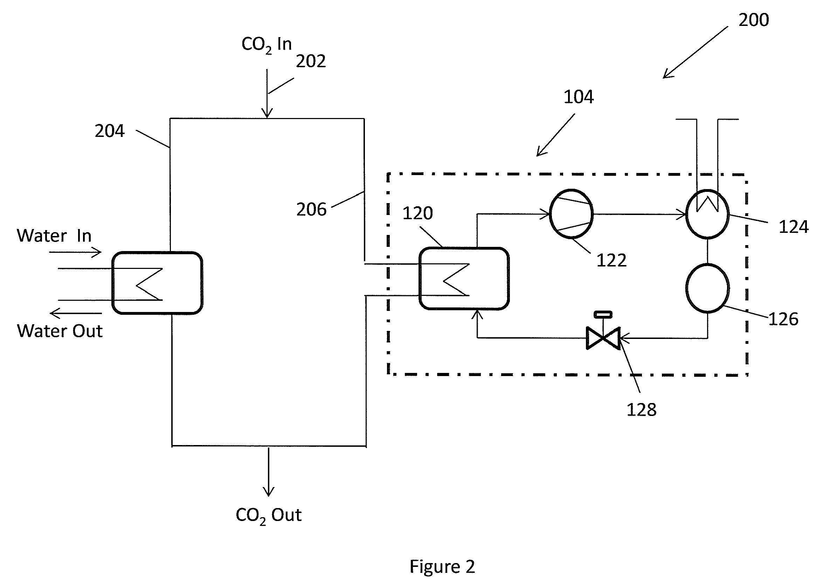

Figure 2 shows an alternative system 200 for carbon dioxide condensation that is suitable for use with the present disclosure. Carbon dioxide gas pipeline 202 divides along two branches 204 and 206. Carbon dioxide that is sent along the branch 204 is cooled using cooling water. Carbon dioxide that is sent along branch 206 is cooled using the exemplary methods of the present disclosure (detailed above with respect to the Figure 1). The amount of carbon dioxide sent along branches 204 and 206 depends on which branch supplies cooling at the lowest temperature. When the temperature of the cooling water is relatively high, i.e., during warm weather, the refrigeration cycle 104 is started in order to ensure that the carbon dioxide remains in a subcritical range during condensation. Once the refrigeration system reaches a temperature inside heat exchanger 120 that is lower than the cooling water temperature, the ratio of carbon dioxide along branches 204 and 206 may be adjusted accordingly, thereby increasing an efficiency of the power plant. When the temperature of the cooling water is relatively low, i.e., during cold weather, then the ratio is adjusted to increase an amount of carbon dioxide sent along branch 204.

Operation of the power plant in this manner ensures that a carbon dioxide compressor pump system that is used for sequestration purposes can be operated in the subcritical region of carbon dioxide all year. The refrigeration system of the present disclosure can be run all year. For various reasons related to cost and efficiency, the present disclosure is used in warm weather rather than, or more often than, in cold weather.

Therefore, disclosed herein is a method of capturing heat at a power plant that includes absorbing the heat released from carbon dioxide gas from the power plant using a refrigerant; transferring the absorbed heat from the refrigerant to a water condensate obtained at the power plant to raise a temperature of the water condensate; and supplying the heated water condensate to the power plant to capture the heat released from the carbon dioxide. The heat is generally released from the carbon dioxide gas during either condensation of the carbon dioxide from a gas to a liquid or compression of the carbon dioxide gas or both. Carbon dioxide is condensed from gas to liquid at a pressure that is less than a critical pressure of carbon dioxide. The water condensate can be obtained from condensation of steam that moves through a steam turbine to generate power at the power plant. The heated water condensate is then supplied to the steam turbine for further power generation. In an exemplary embodiment, the refrigerant absorbs the heat released from the carbon dioxide at a first heat exchanger and transfers the heat to the water condensate at a second heat exchanger. A pressure of the refrigerant at the first heat exchanger is less than a pressure of the carbon dioxide at the first heat exchanger, and a pressure of the refrigerant at the second heat exchanger is less than a pressure of the water condensate at the second heat exchanger. The heat released from the carbon dioxide can also be absorbed at a cooling water heat exchanger that is in parallel with the first heat exchanger. The ratio of heat absorbed by the refrigerant and by the cooling water can be determined by a relative temperature of the refrigerant and the cooling water. In various embodiments, the refrigerant is methylamine.

Disclosed herein too is an apparatus for recirculating heat in a power plant that includes a first heat transfer device configured to transfer heat from a carbon dioxide exhaust gas of the power plant to a refrigerant; and a second heat transfer device configured to transfer the heat from the refrigerant to a water condensate of the power plant, wherein the heated water condensate is provided to the power plant to recirculate the heat. The heat from the carbon dioxide exhaust gas is generated by at least one of: (i) condensation of the carbon dioxide gas to a liquid; and (ii) compression of the carbon dioxide gas. The carbon dioxide condenses from liquid to gas at the first heat exchanger at a pressure that is less than a critical pressure of carbon dioxide. A steam turbine provides the water condensate to the second heat transfer device from condensation of steam used as a working gas at the steam turbine. The pressure of the refrigerant at the first heat exchanger is selected to be less than the pressure of the carbon dioxide at the first heat exchanger, and the pressure of the refrigerant at the second heat exchanger is selected to be less than the pressure of the water condensate at the second heat exchanger. The refrigerant is methylamine. In one embodiment, a cooling water heat exchanger is configured to receive carbon dioxide gas in parallel with the first heat exchanger.

Disclosed herein too is a power plant system that includes an exhaust of the power plant system configured to release a carbon dioxide gas; a first heat exchanger configured to transfer heat from the carbon dioxide gas to a refrigerant; a second heat exchanger configured to transfer the heat from the refrigerant to a water condensate of the power plant system; and a steam turbine configured to generate power using the heated water condensate from the second heat exchanger. The first heat exchanger is configured to transfer heat obtained during a condensation of carbon dioxide form a gaseous phase to a liquid phase. A cooling water heat exchanger can be used to absorb heat from the carbon dioxide in parallel with the first heat exchanger.

Disclosed herein too is a method of operating a power plant, the method including obtaining a carbon dioxide gas from an exhaust of the power plant; transferring heat from the obtained carbon dioxide gas to a heat transfer medium; transferring the heat from the heat transfer medium to a water condensate obtained at the power plant; supplying the heated water condensate to the power plant; and generating steam from the heated water condensate to generate power at a steam turbine of the power plant. In one embodiment, the heat transferred to the heat transfer medium is obtained during a condensation of carbon dioxide from a gaseous phase to a liquid phase. The carbon dioxide condenses at a pressure that is less than a critical pressure of carbon dioxide.

It will be understood that, although the terms "first," "second," "third" etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, "a first element," "component," "region," "layer" or "section" discussed below could be termed a second element, component, region, layer or section without departing from the teachings herein.

The terminology used herein is for the purpose of describing particular embodiments only and is not intended to be limiting. As used herein, the singular forms "a," "an" and "the" are intended to include the plural forms as well, unless the context clearly indicates otherwise. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Furthermore, relative terms, such as "lower" or "bottom" and "upper" or "top," may be used herein to describe one element's relationship to other elements as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The exemplary term "lower," can therefore, encompasses both an orientation of "lower" and "upper," depending on the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

The term and/or is used herein to mean both "and" as well as "or". For example, "A and/or B" is construed to mean A, B or A and B.

While this disclosure describes exemplary embodiments, it will be understood by those skilled in the art that various changes can be made and equivalents can be substituted for elements thereof without departing from the scope of the disclosed embodiments. In addition, many modifications can be made to adapt a particular situation or material to the teachings of this disclosure without departing from the essential scope thereof. Therefore, it is intended that this disclosure not be limited to the particular embodiment disclosed as the best mode contemplated for carrying out this disclosure.

## Claims

1. A method of capturing heat at a power plant, comprising:
absorbing the heat released from carbon dioxide gas from the power plant using a refrigerant (130);
transferring the absorbed heat from the refrigerant (130) to a water condensate (115) obtained at the power plant to raise a temperature of the water condensate (115); and
supplying the heated water condensate (115) to the power plant to capture the heat released from the carbon dioxide
**characterized by**
evaporating the refrigerant when absorbing heat from the carbon dioxide, then compressing the evaporated refrigerant, then
condensing the refrigerant when supplying heat to the water condensate, then expanding the refrigerant and forwarding it to expansion.

2. The method of claim 1, further comprising absorbing the heat that is released from the carbon dioxide gas during at least one of: (i) condensation of the carbon dioxide from a gas to a liquid; and (ii) compression of the carbon dioxide gas.

3. The method of claim 2, further comprising condensing the carbon dioxide from gas to liquid at a pressure that is less than a critical pressure of carbon dioxide.

4. The method of any one of claims 1-3, wherein the water condensate (115) is obtained from condensation of steam that moves through a steam turbine (106) to generate power at the power plant.

5. The method of claim 4, wherein the heated water condensate (115) is supplied to the steam turbine (106) for power generation.

6. The method of any one of claims 1-5, wherein the refrigerant (130) absorbs the heat released from the carbon dioxide at a first heat exchanger (120) and transfers the heat to the water condensate (115) at a second heat exchanger (124).

7. The method of claim 6, wherein a pressure of the refrigerant (130) at the first heat exchanger (120) is less than a pressure of the carbon dioxide at the first heat exchanger (120) and a pressure of the refrigerant (130) at the second heat exchanger (124) is less than a pressure of the water condensate (115) at the second heat exchanger (124).

8. The method of any one of claims 6-7, further comprising absorbing the heat released from the carbon dioxide at a cooling water heat exchanger in parallel with the first heat exchanger (120).

9. The method of claim 8, wherein a ratio of heat absorbed by the refrigerant (130) and absorbed by the cooling water is related to a relative temperature of the refrigerant (130) and the cooling water.

10. The method of any one of claims 1-9, wherein the refrigerant (130) is methylamine.

11. A power plant system having an exhaust of the power plant system configured to release a carbon dioxide gas comprising:
a first heat exchanger (120) configured to transfer heat from the carbon dioxide gas to a refrigerant (130); the first heat exchanger (120) being downstream of the power plant system;
a second heat exchanger (124) configured to transfer the heat from the refrigerant (130) to a water condensate (115) of the power plant system, where the second heat exchanger (124) lies downstream of the first heat exchanger (120); and
a steam turbine (106) configured to generate power using the heated water condensate (115) from the second heat exchanger (124), where the steam turbine (106) lies downstream of the second heat exchanger (124),
**characterized in that**
the first heat exchanger (120) is an evaporator for the refrigerant,
a compressor (122) is provided between the first heat exchanger (120) and the second heat exchanger (124),
the second heat exchanger (124) is a condenser for the refrigerant,
an expansion valve (128) is provided between the second heat exchanger (124) and the first heat exchanger (120).

12. The power plant system of claim 11, wherein the first heat exchanger (120) is configured to transfer heat obtained during a condensation of carbon dioxide from a gaseous phase to a liquid phase.

13. The power plant system of any one of claims 11-12, further comprising a cooling water heat exchanger configured to absorb heat from the carbon dioxide in parallel with the first heat exchanger (120).

## Patentansprüche

1. Verfahren zum Abfangen von Wärme in einem Kraftwerk, umfassend:
Absorbieren der von Kohlendioxidgas von dem Kraftwerk freigesetzten Wärme unter Verwendung eines Kältemittels (130);
Überführen der absorbierten Wärme von dem Kältemittel (130) zu einem in dem Kraftwerk erhaltenen Wasserkondensat (115), um die Temperatur des Wasserkondensats (115) zu erhöhen; und
Zuführen des erhitzten Wasserkondensats (115) zu dem Kraftwerk, um die von dem Kohlendioxid freigesetzte Wärme abzufangen,
**gekennzeichnet durch**
Verdampfen des Kältemittels, wenn es Wärme aus dem Kohlendioxid absorbiert, anschließend
Komprimieren des verdampften Kältemittels, anschließend
Kondensieren des Kältemittels, wenn es dem Wasserkondensat Wärme zuführt, anschließend Expandieren des Kältemittels und Weiterleiten davon zum Expandieren.

2. Verfahren gemäß Anspruch 1, ferner umfassend das Absorbieren der von dem Kohlendioxidgas freigesetzten Wärme während wenigstens einem von: (i) Kondensation des Kohlendioxids von einem Gas zu einer Flüssigkeit; und (ii) Kompression des Kohlendioxidgases.

3. Verfahren gemäß Anspruch 2, ferner umfassend das Kondensieren des Kohlendioxids von einem Gas zu einer Flüssigkeit bei einem Druck, der kleiner als der kritische Druck von Kohlendioxid ist.

4. Verfahren gemäß einem der Ansprüche 1-3, wobei das Wasserkondensat (115) durch Kondensation von Dampf erhalten ist, der sich durch eine Dampfturbine (106) bewegt, um in dem Kraftwerk Strom zu erzeugen.

5. Verfahren gemäß Anspruch 4, wobei das erhitzte Wasserkondensat (115) der Dampfturbine (106) für die Stromerzeugung zugeführt wird.

6. Verfahren gemäß einem der Ansprüche 1-5, wobei das Kältemittel (130) die von dem Kohlendioxid freigesetzte Wärme an einem ersten Wärmetauscher (120) absorbiert und die Wärme an einem zweiten Wärmetauscher (124) zu dem Wasserkondensat (115) überführt.

7. Verfahren gemäß Anspruch 6, wobei der Druck des Kältemittels (130) an dem ersten Wärmetauscher (120) kleiner als der Druck des Kohlendioxids an dem ersten Wärmetauscher (120) ist und der Druck des Kältemittels (130) an dem zweiten Wärmetauscher (124) kleiner als der Druck des Wasserkondensats (115) an dem zweiten Wärmetauscher (124) ist.

8. Verfahren gemäß einem der Ansprüche 6-7, ferner umfassend das Absorbieren der von dem Kohlendioxid freigesetzte Wärme an einem zu dem ersten Wärmetauscher (120) parallelen Kühlwasser-Wärmetauscher.

9. Verfahren gemäß Anspruch 8, wobei das Verhältnis der von dem Kältemittel (130) zu der von dem Kühlwasser absorbierten Wärme mit der relativen Temperatur des Kältemittels (130) und des Kühlwassers in Beziehung steht.

10. Verfahren gemäß einem der Ansprüche 1-9, wobei das Kältemittel (130) Methylamin ist.

11. Kraftwerksystem mit einem Auslass des Kraftwerksystems, der dafür gestaltet ist, ein Kohlendioxidgas freizusetzen, umfassend:
einen ersten Wärmetauscher (120), der dafür gestaltet ist, Wärme von dem Kohlendioxidgas auf ein Kältemittel (130) zu übertragen; wobei der erste Wärmetauscher (120) stromabwärts bezogen auf das Kraftwerksystem angeordnet ist;
einen zweiten Wärmetauscher (124), der dafür gestaltet ist, Wärme von dem Kältemittel (130) auf ein Wasserkondensat (115) des Kraftwerksystems zu übertragen, wobei der zweite Wärmetauscher (124) stromabwärts bezogen auf den ersten Wärmetauscher (120) angeordnet ist; und
eine Dampfturbine (106), die dafür gestaltet ist,
unter Verwendung des erhitzten Wasserkondensats (115) aus dem zweiten Wärmetauscher (124) Strom zu erzeugen, wobei die Dampfturbine (106) stromabwärts bezogen auf den zweiten Wärmetauscher (124) angeordnet ist,
**dadurch gekennzeichnet, dass**
der erste Wärmetauscher (120) ein Verdampfer für das Kältemittel ist,
ein Kompressor (122) zwischen dem ersten Wärmetauscher (120) und dem zweiten Wärmetauscher (124) bereitgestellt ist,
der zweite Wärmetauscher (124) ein Kondensator für das Kältemittel ist,
ein Expansionsventil (128) zwischen dem zweiten Wärmetauscher (124) und dem ersten Wärmetauscher (120) bereitgestellt ist.

12. Kraftwerksystem gemäß Anspruch 11, wobei der erste Wärmetauscher (120) dafür gestaltet ist, während einer Kondensation von Kohlendioxid von einer Gasphase zu einer flüssigen Phase erhaltene Wärme zu übertragen.

13. Kraftwerksystem gemäß einem der Ansprüche 11-12, ferner umfassend einen Kühlwasser-Wärmetauscher, der dafür gestaltet ist, parallel zu dem ersten Wärmetauscher (120) Wärme aus dem Kohlendioxid zu absorbieren.

## Revendications

1. Procédé de capture de chaleur dans une centrale électrique, comprenant :
l'absorption de la chaleur libérée par du dioxyde de carbone gazeux issu de la centrale électrique à l'aide d'un réfrigérant (130) ;
le transfert de la chaleur absorbée du réfrigérant (130) à un condensat aqueux (115) obtenu dans la centrale électrique pour élever une température du condensat aqueux (115) ; et
la fourniture du condensat aqueux chauffé (115) à la centrale électrique pour capturer la chaleur libérée par le dioxyde de carbone,
**caractérisé par**
l'évaporation du réfrigérant lors de l'absorption de la chaleur provenant du dioxyde de carbone, puis
la compression du réfrigérant évaporé, puis
la condensation du réfrigérant lors de la fourniture de la chaleur au condensat aqueux, puis
la détente du réfrigérant et sa circulation jusqu'à la détente.

2. Procédé de la revendication 1, comprenant en outre l'absorption de la chaleur qui est libérée par le dioxyde de carbone gazeux pendant au moins une des étapes suivantes : (i) condensation du dioxyde de carbone de gaz à liquide ; et (ii) compression du dioxyde de carbone gazeux.

3. Procédé de la revendication 2, comprenant en outre la condensation du dioxyde de carbone de gaz à liquide à une pression qui est inférieure à une pression critique de dioxyde de carbone.

4. Procédé de l'une quelconque des revendications 1 à 3, dans lequel le condensat aqueux (115) est obtenu à partir de la condensation de vapeur d'eau qui se déplace à travers une turbine à vapeur (106) pour générer de l'électricité dans la centrale électrique.

5. Procédé de la revendication 4, dans lequel le condensat aqueux chauffé (115) est fourni à la turbine à vapeur (106) pour la production d'électricité.

6. Procédé de l'une quelconque des revendications 1 à 5, dans lequel le réfrigérant (130) absorbe la chaleur libérée par le dioxyde de carbone au niveau d'un premier échangeur de chaleur (120) et transfère la chaleur au condensat aqueux (115) au niveau d'un deuxième échangeur de chaleur (124).

7. Procédé de la revendication 6, dans lequel une pression du réfrigérant (130) au niveau du premier échangeur de chaleur (120) est inférieure à une pression du dioxyde de carbone au niveau du premier échangeur de chaleur (120) et une pression du réfrigérant (130) au niveau du deuxième échangeur de chaleur (124) est inférieure à une pression du condensat aqueux (115) au niveau du deuxième échangeur de chaleur (124).

8. Procédé de l'une quelconque des revendications 6 et 7, comprenant en outre l'absorption de la chaleur libérée par le dioxyde de carbone au niveau d'un échangeur de chaleur à eau de refroidissement en parallèle avec le premier échangeur de chaleur (120).

9. Procédé de la revendication 8, dans lequel un rapport entre la chaleur absorbée par le réfrigérant (130) et absorbée par l'eau de refroidissement est lié à une température relative du réfrigérant (130) et de l'eau de refroidissement.

10. Procédé de l'une quelconque des revendications 1 à 9, dans lequel le réfrigérant (130) est la méthylamine.

11. Système de centrale électrique ayant une évacuation du système de centrale électrique configurée pour relâcher du dioxyde de carbone gazeux comprenant :
un premier échangeur de chaleur (120) configuré pour transférer la chaleur du dioxyde de carbone gazeux à un réfrigérant (130), le premier échangeur de chaleur (120) se situant en aval du système de centrale électrique ;
un deuxième échangeur de chaleur (124) configuré pour transférer la chaleur du réfrigérant (130) à un condensat aqueux (115) du système de centrale électrique, le deuxième échangeur de chaleur (124) se situant en aval du premier échangeur de chaleur (120) ; et
une turbine à vapeur (106) configurée pour générer de l'électricité en utilisant le condensat aqueux chauffé (115) provenant du deuxième échangeur de chaleur (124), la turbine à vapeur (106) se situant en aval du deuxième échangeur de chaleur (124),
**caractérisé en ce que**
le premier échangeur de chaleur (120) est un évaporateur pour le réfrigérant,
un compresseur (122) est disposé entre le premier échangeur de chaleur (120) et le deuxième échangeur de chaleur (124),
le deuxième échangeur de chaleur (124) est un condenseur pour le réfrigérant,
un détendeur (128) est disposé entre le deuxième échangeur de chaleur (124) et le premier échangeur de chaleur (120).

12. Système de centrale électrique de la revendication 11, dans lequel le premier échangeur de chaleur (120) est configuré pour transférer la chaleur obtenue pendant une condensation du dioxyde de carbone d'une phase gazeuse à une phase liquide.

13. Système de centrale électrique de l'une quelconque des revendications 11 et 12, comprenant en outre un échangeur de chaleur à eau de refroidissement configuré pour absorber la chaleur issue du dioxyde de carbone en parallèle avec le premier échangeur de chaleur (120).
